# EUROPÄISCHE PATENTSCHRIFT

(11) **EP 0 985 259 B1**
(45) Veröffentlichungstag und Bekanntmachung des Hinweises auf die Patenterteilung: **16.10.2002**
(21) Anmeldenummer: 98922785.5
(22) Anmeldetag: 29.04.1998
(51) Int. Cl.: H02G 11/02

(54) **KABELTROMMEL MIT INTEGRIERTEM FREQUENZUMFORMER**
CABLE DRUM WITH INTEGRATED FREQUENCY CONVERTER
ENROULEUR DE CABLE A CONVERTISSEUR DE FREQUENCE INTEGRE

(30) Priorität: 27.05.1997 DE 19722107
(43) Veröffentlichungstag der Anmeldung: 15.03.2000
(73) Patentinhaber: WACKER-WERKE GMBH & CO. KG, 80809 München (DE)
(72) Erfinder: STEFFEN, Michael, D-82131 Gauting (DE)
(74) Vertreter: Hoffmann, Jörg Peter, Dr. Ing.
(86) Internationale Anmeldenummer: EP9802542
(87) Internationale Veröffentlichungsnummer: WO98054809

(56) Entgegenhaltungen:
- DE-A- 3 310 311
- DE-A- 3 921 679
- DE-A- 4 405 391
- DE-U- 8 916 195

## Beschreibung

Die Erfindung betrifft eine Kabeltrommel gemäß dem Oberbegriff des Patentanspruchs 1.

Auf Baustellen werden häufig zur Betonverdichtung Innenvibratoren eingesetzt, deren Asynchronmotoren mit einer Sonderspannung und einer Sonderfrequenz versorgt werden müssen. Soll zum Beispiel ein in dem Innenvibrator vorhandener Asynchronmotor mit einer angeschlossenen Unwucht eine Drehzahl von 12.000 min⁻¹ erreichen, ist bei einer 2-poligen Maschine eine Anregungsfrequenz von 200 Hz erforderlich. Das öffentliche Netz stellt jedoch lediglich eine Frequenz von 50 Hz zur Verfügung.

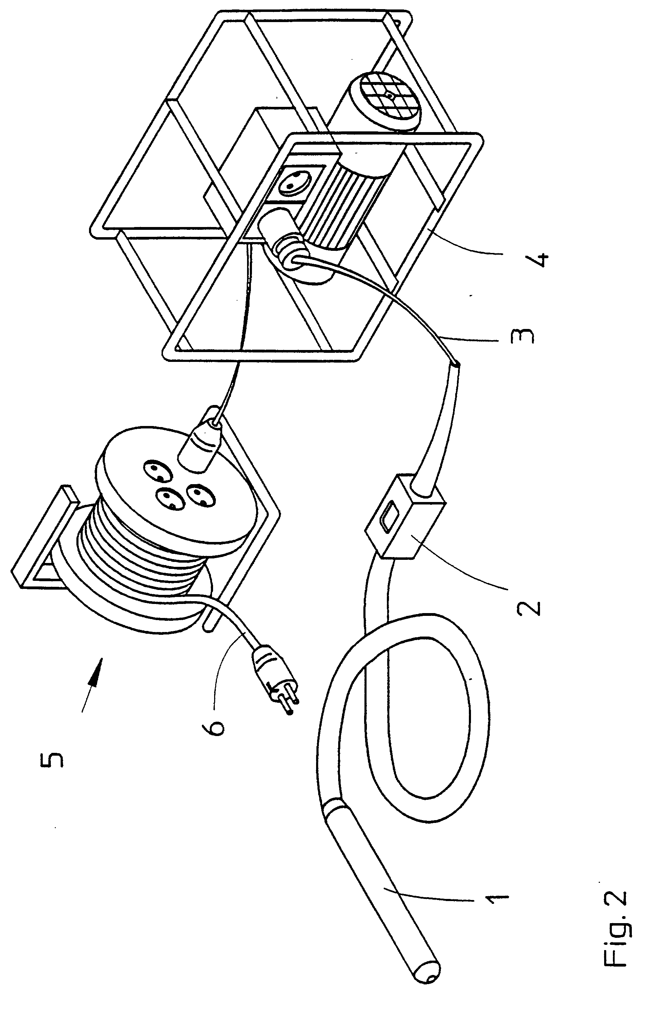

Aus diesem Grund wurden in der Vergangenheit Frequenzumformer eingesetzt, die meist mit Drehstrom versorgt wurden und aufgrund Ihres hohen Gewichts sehr schwer zu handhaben waren. Ein Beispiel für eine derartige Anordnung zeigt Fig. 2.

Gemäß Fig. 2 ist ein Innenvibrator 1 über einen Schalter 2 und ein Kabel 3 mit einem herkömmlichen Frequenzumformer 4 verbunden. Da auf Baustellen meist größere Entfernungen zwischen der Arbeitsstelle und dem nächsten fest angeordneten Netzanschluß zu überbrücken sind, ist der Frequenzumformer 4 mit einer allgemein bekannten Kabeltrommel 5 verbunden. Von der Kabeltrommel 5 kann ein Kabel 6 abgewickelt und an den weit entfernten Netzanschluß angeschlossen werden.

In jüngerer Zeit wurde es möglich, durch Bereitstellung von entsprechender Leistungselektronik mit entsprechenden Halbleitern den Frequenzumformer zu miniaturisieren und auf diese Weise sein Gewicht von beispielsweise 60 kg auf 4 kg zu vermindern. Ein derartiger leichterer Frequenzumformer wird nach wie vor zwischen den Innenvibrator 1 und die Kabeltrommel 5 geschaltet. Bei Bewegung des Innenvibrators zu verschiedenen Arbeitsstellen müssen daher nach wie vor der Frequenzumformer und zusätzlich die Kabeltrommel bewegt werden.

Aus der DE 4405391 A1 ist eine Kabeltrommel gemäß dem Oberbegriff des Patentanspruchs 1 bekannt, in die ein Radio integriert ist, so daß die Kabeltrommel und das Radio als Einheit bewegt werden.

Die DE 8916195 U1 offenbart ebenfalls eine Kabeltrommel mit einem in der Trommel angeordneten, einsteckbaren Radio.

In der DE-GM 7641166 wird eine Kabeltrommel mit einer integrierten Leuchtquelle beschrieben.

Der Erfindung liegt die Aufgabe zugrunde, die Handhabbarkeit eines Baustellengeräts, insbesondere eines Innenvibrators weiter zu verbessern, insbesondere seine Beweglichkeit zwischen mehreren Arbeitsstellen.

Die erfindungsgemäße Lösung der Aufgabe ist in Patentanspruch 1 definiert. Vorteilhafte Ausgestaltungen der Erfindung sind den Unteransprüchen zu entnehmen.

Die erfindungsgemäße Lösung der Aufgabe erfolgt durch eine Kabeltrommel mit einem drehbar auf einem Gestell gelagerten Rundling, an dem wenigstens eine Steckdose angeordnet ist und auf dem ein Kabel aufwickelbar ist, dadurch gekennzeichnet, daß an dem Rundling ein Frequenzumformer befestigt ist und daß wenigstens die eine Steckdose mit dem Frequenzumformer elektrisch gekoppelt und mit einer elektrischen Sonderfrequenz versorgt ist.

Durch diese Integration von Kabeltrommel und Frequenzumformer braucht bei einer Bewegung des Innenvibrators von einer Arbeitsstelle zu einer anderen zusätzlich nur noch die neben dem Kabel auch den Frequenzumformer tragende Kabeltrommel bewegt zu werden. Darüber hinaus können Bauteile und Gewicht gespart werden, da der Umformer kein separates Gehäuse und keine aufwendige Spannungsversorgung benötigt.

Besonders vorteilhaft ist es, wenn der Frequenzumformer in dem Bereich des Rundlings angeordnet ist, der von dem Kabel umgeben ist, wenn das Kabel auf den Rundling aufgewickelt ist. Im Inneren des Rundlings, d.h. innerhalb der Kabelwicklung befindet sich meist genügend Bauraum, um den miniaturisierten Frequenzumformer unterbringen zu können. Auf diese Weise wird der von der Kabeltrommel genutzte Bauraum optimal ausgenutzt.

Zweckmäßigerweise wird der Bereich von einer Drehachse des Rundlings durchdrungen. Der Frequenzumformer ist daher dicht an der Symmetrieachse der Kabeltrommel angeordnet, wodurch die gleichmäßige Drehung des Rundlings beim Aufund Abwickeln des Kabels nicht beeinträchtigt wird.

Sehr vorteilhaft ist es, daß die Umformung der Frequenz in dem Frequenzumformer im wesentlichen durch elektronische Halbleiter erfolgt. Dadurch ist es möglich, den bisher bekannten großen und schwer zu handhabenden Frequenzumformer zu miniaturisieren, daß er in der Kabeltrommel unterbringbar ist.

Bei einer besonders vorteilhaften Ausführungsform der Erfindung sind auf einer Stirnseite des Rundlings Steckdosen angeordnet, die elektrisch mit dem Kabel verbunden sind. Wenigstens eine der Steckdosen sollte mit Netzspannung und Netzfrequenz versorgt sein, während wenigstens eine andere Steckdose mit dem integrierten Frequenzumformer elektrisch gekoppelt und mit einer elektrischen Sonderfrequenz versorgt ist. Dadurch sind an der Stirnseite des Rundlings verschiedene Arten von Steckdosen vorgesehen, die entweder eine Verlängerung des öffentlichen Netzes mit 230 V oder 400 V ermöglichen oder den speziellen Umformerstrom, insbesondere für den Innenvibrator bereitstellen.

Nachfolgend wird die Erfindung unter Zuhilfenahme der begleitenden Figuren näher erläutert. Es zeigen:
- **Fig. 1**: eine erfindungsgemäße Kabeltrommel mit angeschlossenem Innenvibrator; und
- **Fig. 2**: eine herkömmliche Anordnung mit einer Kabeltrommel, einem getrennten Frequenzumformer und einem Innenvibrator.

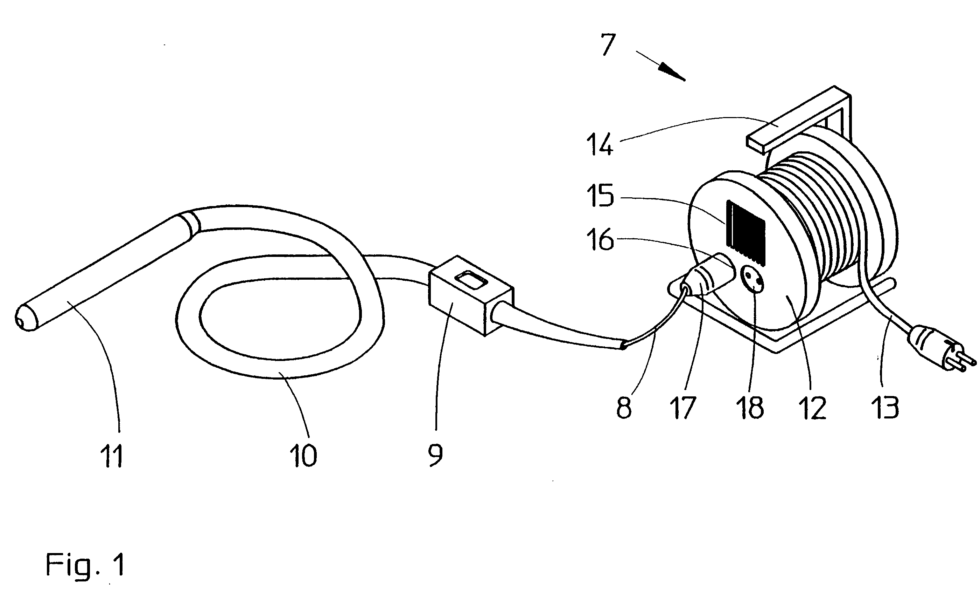

Fig. 1 zeigt eine Anordnung bestehend aus einer erfindungsgemäßen Kabeltrommel 7 und einem daran über ein Kabel 8, einen Schalter 9 und ein Kabel 10 angeschlossenen Innenvibrator 11, der in bekannter Weise einen Asynchronmotor mit Unwucht in einer Rüttelflasche aufweist.

Auf einem Rundling 12 ist ein Kabel 13 aufgewickelt, das bei Abwicklung zu einer öffentlichen Netzsteckdose geführt werden kann. Der Rundling 12 ist an einem Gestell 14 in bekannter Weise drehbar gelagert.

Im Kern des Rundlings 12, d.h. im wesentlichen in dem Bereich, der von dem aufgewikkelten Kabel 13 umgeben ist, ist ein Frequenzumformer 15 eingebaut. Je nach Ausführungsform der Kabeltrommel kann er aber auch außerhalb des von dem Kabel 13 umgebenen Bereichs angeordnet sein, so z.B. auf der Stirnseite der Kabeltrommel. Bei entsprechender Ausbildung des Frequenzumformers 15 kann er auch massensymmetrisch zu einer in Fig. 1 nicht gekennzeichneten Drehachse des Rundlings 12 angeordnet werden, so daß sein Schwerpunkt auf der Drehachse zu liegen kommt.

Der Frequenzumformer 15 arbeitet auf Halbleiterbasis, was eine kompakte und gewichtssparende Ausführungsform ermöglicht. Er wird über das Kabel 13 mit Netzspannung versorgt und wandelt diese in eine Sonderspannung und eine Sonderfrequenz, z.B. 200 Hz mit 42 V. Die von dem Frequenzumformer 15 erzeugte Wechselspannung wird an eine an dem Rundling befestigte bzw. in diesen integrierte Steckdose 16 abgegeben, an die ein Stecker 17 anschließbar ist, so daß der Innenvibrator 11 mit der Sonderspannung versorgt werden kann.

Zusätzlich zu der Sonderfrequenz kann auf der Stirnseite des Rundlings 12 auch noch wenigstens eine Steckdose 18 vorgesehen sein, die mit Netzspannung versorgt wird.

Je nach Ausführungsform der Kabeltrommel stellen die Steckdosen 16, 18 eine Verlängerung des öffentlichen Netzes oder eine Bereitstellung des speziellen Umformerstroms dar.

Die Zusammenfassung bzw. Integration der Kabeltrommel 7 mit dem miniaturisierten Frequenzumformer 15 zu einer baulichen Einheit gewährleistet eine Reduzierung der Teile, eine Verminderung des Gewichts, geringere Empfindlichkeiten gegen Feuchtigkeit und mechanische Einwirkungen und erleichtert die Bewegung der gesamten Anordnung zu verschiedenen Arbeitsstellen, da kein zusätzlicher Frequenzumformer von dem Bediener bewegt werden muß.

Das Gehäuse der Kabeltrommel 7, d.h. der Rundling 12 kann gleichzeitig als Schutzisolierung für den Frequenzumformer 15 dienen.

## Patentansprüche

1. Kabeltrommel (7) mit einem drehbar auf einem Gestell (14) gelagerten Rundling (12). an dem wenigstens eine Steckdose (16) angeordnet ist und auf dem ein Kabel (13) aufwickelbar ist, **dadurch gekennzeichnet, daß** an dem Rundling (12) ein Frequenzumformer (15) befestigt ist und daß wenigstens die eine Steckdose (16) mit dem Frequenzumformer (15) elektrisch gekoppelt und mit einer elektrischen Sonderfrequenz versorgt ist.

2. Kabeltrommel nach Anspruch 1, **dadurch gekennzeichnet, daß** der Frequenzumformer (15) in dem Bereich des Rundlings (12) angeordnet ist, auf den das Kabel (13) aufwickelbar ist.

3. Kabeltrommel nach Anspruch 2, **dadurch gekennzeichnet, daß** der Bereich von einer Drehachse des Rundlings (12) durchdrungen ist.

4. Kabeltrommel nach einem der vorstehenden Ansprüche, **dadurch gekennzeichnet, daß** der Frequenzumformer (15) über das Kabel (13) mit Netzspannung und Netzfrequenz versorgt ist, und daß die Umformung der Frequenz in dem Frequenzumformer (15) im wesentlichen durch elektronische Halbleiter erfolgt.

5. Kabeltrommel nach einem der vorstehenden Ansprüche, **dadurch gekennzeichnet, daß** wenigstens eine andere Steckdose (18) elektrisch mit dem Kabel (13) verbunden und auf einer Stirnseite des Rundlings (12) angeordnet ist.

6. Kabeltrommel nach Anspruch 5, **dadurch gekennzeichnet, daß** wenigstens die eine andere Steckdose (18) mit Netzspannung und Netzfrequenz versorgt ist.

## Claims

1. Cable drum (7) having a circular body (12) rotatably mounted on a frame (14), on which circular body at least one socket (16) is disposed, and on which a cable (13) can be wound, **characterised in that** a frequency converter (15) is attached to the circular body (12) and that at least one socket (16) is electrically coupled to the frequency converter (15) and is supplied with an electric special frequency.

2. Cable drum according to claim 1, **characterised in that** the frequency converter (15) is disposed in the region of the circular body (12) onto which the cable (13) can be wound.

3. Cable drum according to claim 2, **characterised in that** this region is penetrated by an axis of rotation of the circular body (12).

4. Cable drum according to one of the preceding claims, **characterised in that** the frequency converter (15) is supplied with mains voltage and mains frequency via the cable (13), and that the conversion of the frequency in the frequency converter (15) takes place substantially by means of electronic semi-conductors.

5. Cable drum according to one of the preceding claims, **characterised in that** at least one other socket (18) is electrically connected to the cable (13) and is disposed on a front face of the circular body (12).

6. Cable drum according to claim 5, **characterised in that** at least the other socket (18) is supplied with mains voltage and mains frequency.

## Revendications

1. Enrouleur de câble (7) avec une bobine (12) montée tournante sur un bâti (14), sur laquelle est disposée au moins une prise (16) et sur laquelle peut être enroulé un câble (13), **caractérisé en ce qu'**à la bobine (12) est fixé un convertisseur de fréquence (15) et **en ce que** la ou les prises (16) sont accouplées électriquement au convertisseur de fréquence (15) et sont alimentées avec une fréquence électrique spéciale.

2. Enrouleur de câble selon la revendication 1, **caractérisé en ce que** le convertisseur de fréquence (15) est disposé dans la zone de la bobine (12) sur laquelle peut être enroulé le câble (13).

3. Enrouleur de câble selon la revendication 2, **caractérisé en ce que** la zone est traversée par un axe de rotation de la bobine (12).

4. Enrouleur de câble selon l'une des revendications précédentes, **caractérisé en ce que** le convertisseur de fréquence (15) est alimenté en tension de réseau et fréquence de réseau par le câble (13) et **en ce que** la conversion de la fréquence dans le convertisseur de fréquence (15) s'effectue essentiellement par des semi-conducteurs électroniques.

5. Enrouleur de câble selon l'une des revendications précédentes, **caractérisé en ce qu'**au moins une autre prise (18) est reliée électriquement au câble (13) et est disposée sur une face d'extrémité de la bobine (12).

6. Enrouleur de câble selon la revendication 5, **caractérisé en ce que** l'autre ou les autres prises (18) sont alimentées en tension de réseau et fréquence de réseau.
